**Europäisches Patentamt**

**European Patent Office**

**Office européen des brevets**

(19)

(11) **EP 1 248 380 A1**

(12) ## EUROPEAN PATENT APPLICATION

(43) Date of publication:
**09.10.2002 Bulletin 2002/41**

(51) Int Cl.$^7$: **H04B 1/58**

(21) Application number: **01400840.3**

(22) Date of filing: **03.04.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **ALCATEL**<br>**75008 Paris (FR)** | (72) Inventors:<br>• **Pollet, Thierry**<br>**2800 Mechelen (BE)**<br>• **Bloch, Stéphane**<br>**1640 Rhode Saint Genese (BE)**<br><br>(74) Representative: **Plas, Axel et al**<br>**Alcatel Bell N.V.,**<br>**Francis Wellesplein 1**<br>**2018 Antwerpen (BE)** |

(54) **Device for balancing a transmission line input impedance**

(57)     The present invention is related to a hybrid for digital subscriber line communication systems, said hybrid comprising means (1) for injecting a transmit signal ($V_t$) into a loop (3), means for extracting a receive signal ($V_r$) from said loop, and a balancing circuit for matching the input impedance of said loop, characterised in that said balancing circuit comprises at least one group (10) of a resistor ($R_1...R_n$), an inductor ($L_1...L_n$) and a capacitor ($C_1...C_n$), connected in parallel.

FIG. 3

EP 1 248 380 A1

# Description

## Field of the invention

The present invention is related to devices used in telecommunication technologies, more in particular in Digital Subscriber Line systems (xDSL) wherein an echo cancelling technique is applied.

## State of the art

In current data communication technology, the Digital Subscriber Line systems (xDSL) are of growing importance. These systems allow a high transmission speed of digital data over conventional twisted pair cables, between the phone company's central office (CO) and the user. Transfer of digital data in both directions of such a loop (formed by the two wires of the twisted pair) is performed simultaneously. This means that the transmit signal and the receive signal may be present on the same line, sharing the same frequency band. The two can be separated by assigning a separate band for upstream and downstream transfer, or fully or partially overlapping bands can be used, in which case an echo cancellation technique is required. In this last case, the separation between the two signals is done by an analog echo precancellation device. This echo precancellation device generates a replica of the transmit signal and subtracts it from the receive signal.

The hybrid is part of a modem. It is a three port device of which the first port is connected to the transmitter, the second port is connected to the input of the co-located receiver and the third port is connected to the line. It's function is to couple signals into the line and extract the receive signals (transmitted by a distant transmitter) from the line. The hybrid necessarily comprises a balancing impedance, which is ideally identical to the line input impedance of the loop. For single segment loops, a single resistor or an RC circuit is often sufficient to serve as such a balancing impedance. A problem arises however when the input impedance isof the line is not purely resistive, e.g. when bridged taps are present: these are open circuited transmission lines, connected in parallel to the working line. These bridged taps give raise to an input impedance (characterised by its magnitude and phase) which strongly varies with frequency. are the cause for peaks in the line impedance's frequency spectrum. It is difficult to generate a balance impedance equal to the input line impedance with a balancing circuit consisting of a resistor or having an RC structure..

An example of a hybrid with a balancing circuit comprising an RC ladder can be found in *the document 'A 25-kft, 768-kb/s CMOS Analog Front End for Multiple-Bit-Rate DSL Transceiver', Moyal et al., IEEE Journal of Solid-State Circuits, vol. 34, n°12, December 1999.*

## Aims of the invention

The present invention aims to provide a hybrid comprising an improved balancing impedance.

## Summary of the invention

The present invention is related to a hybrid in digital subscriber line communication systems, said device comprising means for injecting a transmit signal into a loop, means for extracting a receive signal from said loop, and a balancing circuit for matching the input impedance of said loop, characterised in that said balancing circuit comprises at least one group of a resistor, an inductor and a capacitance connected in parallel.

According to a further embodiment, at least one of said resistor, said inductor and said capacitor of each of said groups is tuneable.

According to another embodiment, several of said groups are present, said groups being connected together in series.

According to the invention, said balancing circuit may further comprise a serially coupled resistor, adapted to match an out-of-peak contribution to said line input impedance. This resistor may be tuneable.

The invention is equally related to a digital subscriber line communication modem comprising a hybrid according to the invention.

## Short description of the drawings

Fig. 1 represents a schematic view of a circuit of a hybrid.
Fig. 2 represents a schematic view of an impedance peak due to the presence of bridged taps.
Fig. 3 illustrates a balancing impedance according to the present invention.

## Detailed description of the invention

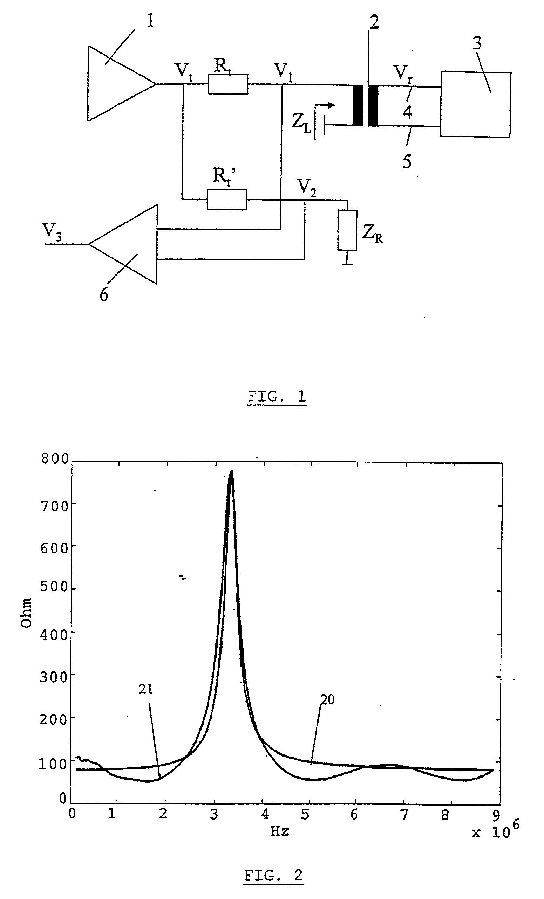

Figure 1 shows a schematic view of the principle of a hybrid, which is present at the side of the Central Office. The normal transmission path consists of a linedriver 1, the line input termination resistor $R_t$, the line coupling transformer 2 and the transmission loop 3, consisting of the two conductors 4,5 of a standard twisted pair cable.

The loop has an input impedance $Z_L$ which is a function of the length, cable thickness, presence of bridged taps or other parameters. A replica $Z_R$ of this impedance is present in the hybrid. Also, a replica $R_t'$ of the line input termination resistor is present. The transmit signal $V_t$ and the receive signal $V_r$ are both present simultaneously, which calls for the cancellation of the influence of $V_t$ in order to obtain the desired receive signal. Signals $V_1$ and $V_2$ are derived from $V_t$ and $V_r$ as will

be explained in more detail. A differential amplifier 6 is present to produce the signal $V_3 = V_1 - V_2$. For a perfectly operating hybrid, the condition $V_3 = V_r$ must be fulfilled, which depends primarily on the hybrid's balancing circuit.

The receive signal $V_r$ is produced by the user at the other end of the loop and sent towards the hybrid. At the same time however, a transmit signal $V_t$ is present, so that a signal $V_1$ is detected which is a combination of the receive signal and a portion of the transmit signal, namely :

$$V_1 = V_t \frac{Z_L}{Z_L + R_t} + V_r$$

The signal $V_2$ equals :

$$V_2 = \frac{Z_R}{Z_R + R_t} V_t,$$

The difference $V_3$ between $V_1$ and $V_2$ is obtained after the differential amplifier :

$$V_3 = V_1 - V_2$$

It is clear from the formulas above that the conditions $R_t = R'_t$ and $Z_L = Z_R$ need to be fulfilled in order to reconstruct the signal $V_r$ correctly (i.e. $V_r = V_3$).

It is especially the condition $Z_L = Z_R$ which is most difficult to fulfill. Figure 2 illustrates a peak in the impedance's spectrum, which is a typical consequence of the presence of bridged taps in the loop.

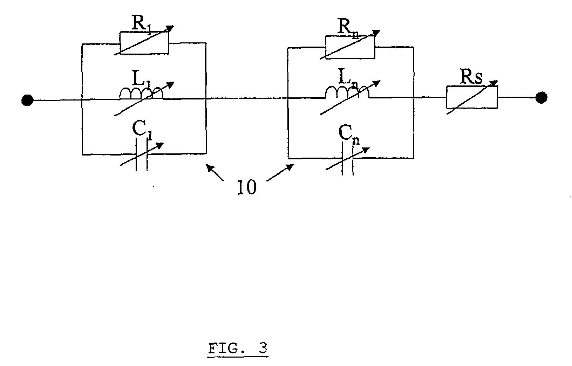

According to the present invention, such a balancing impedance $Z_R$ may take on the form as shown in figure 3. In this configuration, $Z_R$ comprises a cascade of n RLC circuits 10, each comprising a resistor ($R_1$ to $R_n$), an inductor ($L_1$ to $L_n$) and a capacitor ($C_1$ to $C_n$), connected in parallel. Each of the RLC-groups is designed to match a peak in the spectrum of the loop's input impedance. Naturally, if only one peak is present, the balancing impedance of the invention may consist of only one RLC group. According to the preferred embodiment, the resistor, the inductor, and the capacitor are all tuneable. A resistor $R_s$ can be added serially to match the out-of-peak line input impedance. The added resistor $R_s$ can be tuneable. For a specific configuration, figure 2 compares the impedance spectrum of the balancing circuit (curve 20) to the input impedance of the loop (curve 21). The match between the two curves is very good.

The hybrid of the present invention allows an extra echo reduction of up to 10dB. This allows to save a bit in the ADC (after the differential amplifier 6), and to reduce the power consumption. If the same number of bits is used, the noise can be reduced.

**Claims**

1. Hybrid for a digital subscriber line communication systems, said hybrid comprising means (1) for injecting a transmit signal ($V_t$) into a loop (3), means for extracting a receive signal ($V_r$) from said loop, and a balancing circuit for matching the input impedance of said loop, **characterised in that** said balancing circuit comprises at least one group (10) of a resistor ($R_1...R_n$), an inductor ($L_1...L_n$) and a capacitor ($C_1...C_n$), connected in parallel.

2. Hybrid according to claim 1, wherein at least one of said resistor, said capacitor and said inductor of each of said groups (10) is tuneable.

3. Hybrid according to claim 1 or 2, wherein several of said groups (10) are present, said groups being connected together in series.

4. Hybrid according to any one of the preceding claims, wherein said matching circuit further comprises a serially coupled resistor ($R_s$), adapted to match an out-of-peak contribution to said line input impedance.

5. Hybrid according to claim 4, wherein said serially coupled resistor ($R_s$) is tuneable.

6. A digital subscriber line communication modem comprising a hybrid according to any one of the preceding claims 1 to 5.

FIG. 1

FIG. 2

FIG. 3

**European Patent Office**

## EUROPEAN SEARCH REPORT

Application Number

EP 01 40 0840

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 00 79693 A (2WIRE INC) 28 December 2000 (2000-12-28) * abstract * * page 8, line 16 - page 9, line 25 * * figures 7,8 * | 1-6 | H04B1/58 |
| X | GB 2 130 851 A (GRUNDY & PARTNERS LTD) 6 June 1984 (1984-06-06) * abstract * * page 2, line 55 - line 105 * * figure 4 * | 1-6 | |
| A | GB 1 115 215 A (STANDARD TELEPHONES CABLES LTD) 29 May 1968 (1968-05-29) * page 2, line 27 - page 3, line 53 * * figures 1-3 * | 1-6 | |

| | TECHNICAL FIELDS SEARCHED (Int.Cl.7) |
|---|---|
| | H04B H04M |

The present search report has been drawn up for all claims

| Place of search | Date of completion of the search | Examiner |
|---|---|---|
| THE HAGUE | 17 September 2001 | Tzimeas, K |

## ANNEX TO THE EUROPEAN SEARCH REPORT
## ON EUROPEAN PATENT APPLICATION NO.

EP 01 40 0840

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2001

| Patent document cited in search report | | Publication date | Patent family member(s) | | Publication date |
|---|---|---|---|---|---|
| WO 0079693 | A | 28-12-2000 | AU<br>WO | 6540400 A<br>0079693 A1 | 09-01-2001<br>28-12-2000 |
| GB 2130851 | A | 06-06-1984 | DE<br>SE | 3341376 A1<br>8306414 A | 24-05-1984<br>25-05-1984 |
| GB 1115215 | A | 29-05-1968 | ES | 350823 A1 | 16-05-1969 |

EPO FORM P0459

For more details about this annex : see Official Journal of the European Patent Office, No. 12/82